# EUROPÄISCHE PATENTSCHRIFT

(11) **EP 1 871 534 B1**
(45) Veröffentlichungstag und Bekanntmachung des Hinweises auf die Patenterteilung: **18.11.2009**
(21) Anmeldenummer: 06742286.5
(22) Anmeldetag: 21.04.2006
(51) Int. Cl.: B05B 7/04, B05B 7/06, B01J 2/16, B01J 8/24

(54) **SPRÜHDÜSE FÜR EINE WIRBELSCHICHTEINRICHTUNG**
SPRAY NOZZLE FOR FLUIDIZED BED DEVICE
BUSE DE PULVERISATION POUR DISPOSITIF A LIT FLUIDISE

(30) Priorität: 21.04.2005 DE 102005019444
(43) Veröffentlichungstag der Anmeldung: 02.01.2008
(73) Patentinhaber: GLATT GMBH, 79589 Binzen (DE)
(72) Erfinder: LUY, Bernhard, 79295 Sulzburg (DE); STRUSCHKA, Manfred, 79424 Auggen (DE); TONDAR, Matthias, 79688 Hausen i.W. (DE)
(74) Vertreter: Pätzelt, Peter
(86) Internationale Anmeldenummer: PCT/DE2006/000743
(87) Internationale Veröffentlichungsnummer: WO 2006/111161

(56) Entgegenhaltungen:
- EP-A- 0 597 092
- WO-A-2004/087330
- WO-A-2004/101133
- US-A- 4 422 900
- PATENT ABSTRACTS OF JAPAN Bd. 1997, Nr. 05, 30. Mai 1997 (1997-05-30) -& JP 09 019651 A (KAKEN PHARMACEUT CO LTD; FREUNT IND CO LTD), 21. Januar 1997 (1997-01-21)

## Beschreibung

### Technisches Gebiet

Die Erfindung betrifft eine Sprühdüse für eine Wirbelschichteinrichtung, insbesondere zur Beschichtung eines pulvrigen oder körnigen Produktes in der pharmazeutischen oder chemischen Industrie. Derartige Einrichtungen werden in der Praxis überwiegend zum Versprühen eines flüssigen oder fließfähigen Wirkstoffes auf ein in der Wirbelschichteinrichtung umwälzendes pulvriges oder körniges Trägermaterial oder Vorprodukt aufgesprüht. Die Sprühdüsen können verschiedene Einbaulagen aufweisen, vorzugsweise mit einer vertikalen Sprührichtung von unten nach oben oder umgekehrt. Ein entsprechendes Verfahren zur Granulierung von Teilchen wird beispielhaft in der EP 1 064 990 B1 beschrieben.

### Stand der Technik

In der pharmazeutischen und chemischen Industrie kommen dabei überwiegend auch sensible und toxische Stoffe zum Einsatz, was zu einem erhöhten Aufwand für die Sauberkeit der Einrichtungen führt. Allgemeine Verstopfungen der Düse sollten ohne Abbruch des Prozesses beseitigt werden können. Auch ist es sinnvoll, die Reinigung der Sprüheinrichtung vornehmen zu können, ohne dass das Produkt aus dem Prozessraum entleert und nach erfolgter Reinigung wieder beschickt werden muss (erleichtertes Handling). Vor einem Produktwechsel muss die gesamte Einrichtung einer gründlichen Reinigung unterzogen werden. Neben anderen kritischen Bauteilen, ist besonders die Reinigung der Sprühdüse, mit ihrer zentrischen Öffnung für das Beschichtungsmittel sowie der ringförmigen Öffnung zur koaxialen Zuführung der Zerstäubungsluft, schwierig.

Erschwerend ist, dass in vielen Fällen auch während der Reinigung einer einzelnen Sprühdüse bzw. von mehreren Sprühdüsen oder der gesamten Wirbelschichteinrichtung aus Sicherheitsgründen im Innenraum ein Unterdruck aufrechterhalten werden muss. Deshalb, sowie aus Sicherheitsgründen (druckfeste bzw. druckstoßfeste Ausführung) sind Reinigungsöffnungen in der Wirbelschichteinrichtung während des laufenden Prozesses nur sehr begrenzt möglich.

Nach dem Stand der Technik sind verschiedene Waschverfahren und -einrichtungen bekannt, bei denen über gesonderte feste oder bewegliche Reinigungsdüsen eine Reinigungsflüssigkeit in den Innenraum der Wirbelschichteinrichtung und dabei insbesondere auf die kritischen Einbauelemente eingesprüht wird.

Die WO 2004/087330 A1 beschreibt eine Düse zum Versprühen von flüssigen Stoffen in einer Wirbelschichtgranulieranlage. Das Innenrohr der Düse ist in einem Aufnahmeblock gelagert, der fest und lösbar an einem Rohr im unteren Bereich des Lanzengrundkörpers befestigt ist. Zum Zwecke der Reinigung kann das Innenrohr der Düse nach Entfernung der Befestigung aus dem Lanzengrundkörper entfernt werden.

Mit Bezug auf die Reinigung einer am Boden der Wirbelschichteinrichtung angeordneten Sprühdüse sind in der Praxis Verfahren bekannt geworden, bei denen die gesamte rohrförmige Zuführungseinrichtung, einschließlich der Leitungen für das Beschichtungsmittel und die zerstäubungsluft nach unten und seitlich nach außen von der Wirbelschichteinrichtung entfernt wird. Nachteilig ist dabei der erhebliche Aufwand der Demontage sowie das Ausbilden einer relativ großen Öffnung in der Wandung der Wirbelschichteinrichtung.

### Darstellung der Erfindung

Der Erfindung liegt damit als Aufgabe zugrunde, eine Sprühdüse für eine Wirbelschichteinrichtung anzugeben, die mit einfachen technischen Mitteln auch ohne Unterbrechung des Verwirbelungsprozesses gereinigt werden kann, ohne die gesamte Sprüheinrichtung entfernen zu müssen.

Die Erfindung löst die Aufgabe durch die im Anspruch 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Der Kern der Erfindung besteht darin, dass die Sprühdüse einen in der Wandung des Gehäuses der Wirbelschichteinrichtung fest gehalterten Hüllkörper aufweist, der über ein Luftrohr mit einer äußeren Quelle für die Zerstäubungsluft verbunden ist, und zentrisch innerhalb des Hüllkörpers ein axial verschiebbarer und leicht demontierbarer Düsenkopf gelagert ist, welcher über ein Flüssigkeitsrohr mit einer äußeren Quelle für ein flüssiges Beschichtungsmittel verbunden ist.

Der Hüllkörper ist bei so genannten Bottom-SprayVerfahren (Wurster-Prozess) vorzugsweise im Boden des Gehäuses der Wirbelschichteinrichtung gehaltert. Bei der so genannten Top-Spray-Konfiguration (klassische Sprühagglomeration) ist der Hüllkörper im oberen Teil des Wirbelschicht-Prozessraumes gehaltert. Das Luftrohr führt jeweils über einen Bogen seitlich aus der Wirbelschichteinrichtung heraus. Erfindungsgemäß weist das Flüssigkeitsrohr einen flexiblen Rohrabschnitt auf und ist zentrisch innerhalb des Luftrohres geführt. Der Düsenkopf liegt an einem axialen Anschlag innerhalb einer zentrischen Bohrung im Hüllkörper an.

Das Flüssigkeitsrohr ist in einem Verschluss am Luftrohr axial verschiebbar gelagert und mit einer äußeren Einrichtung zur Erzeugung einer axialen Kraftkomponente verbunden, die den Düsenkopf über das Flüssigkeitsrohr an den Anschlag drückt. Zur Lagerung des Flüssigkeitsrohres und des flexiblen Rohrabschnittes im Luftrohr sind radiale Stützringe vorhanden.

Innerhalb des Düsenkopfes kann auch eine axial verschiebbare Reinigungsnadel vorhanden sein, die mit einer Betätigungseinrichtung verbunden ist. Die Reinigungsnadel befindet sich im Ruhezustand in einer Position, in der der Flüssigkeitsauslass freigegeben ist. Bei Verstopfung dieser Öffnung kann durch axiale Bewegung der Reinigungsnadel die Verstopfung aus dem Düsenkopf hinaus gedrückt werden. Die Betätigungseinrichtung kann innerhalb des Flüssigkeitsrohres geführt sein, derart dass sie manuell von außen betätigt werden kann. Es sind aber auch Lösungen möglich,
bei der die Reinigungsnadel innerhalb des Düsenkopfes magnetisch axial bewegt wird.

Der Vorteil der erfindungsgemäßen Einrichtung besteht insbesondere darin, dass die Einrichtung sehr einfach aufgebaut sowie gut handhabbar ist und somit auch sehr leicht und schnell zu reinigen ist. Weiterhin kann in der Praxis davon ausgegangen werden, dass grundsätzlich ein Anlagenbediener anwesend ist, der den Prozess beobachten muss, so dass er auch ohne besonderen Aufwand die erforderliche Beseitigung von Verstopfungen erledigen kann.

Ein weiterer wesentlicher Vorteil besteht darin, dass nach der Entfernung der vorgenannten Teile aus dem Luftrohr die Wirbelschichteinrichtung lediglich in der Größe des relativ kleinen äußeren Durchmessers des Düsenkopfes geöffnet wird. Nach dem Stand der Technik entsteht dem gegenüber eine wesentlich größere Öffnung entsprechend dem äußeren Durchmesser eines Endstückes entsprechend dem Hüllkörper, mit dem Risiko, dass insbesondere bei der Bottom-Sprayvariante Partikel nach unten aus der Wirbelschichteinrichtung fallen.

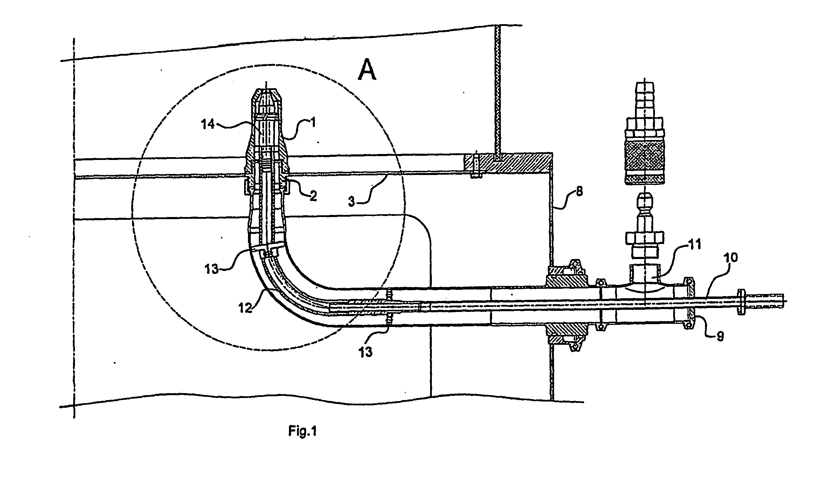

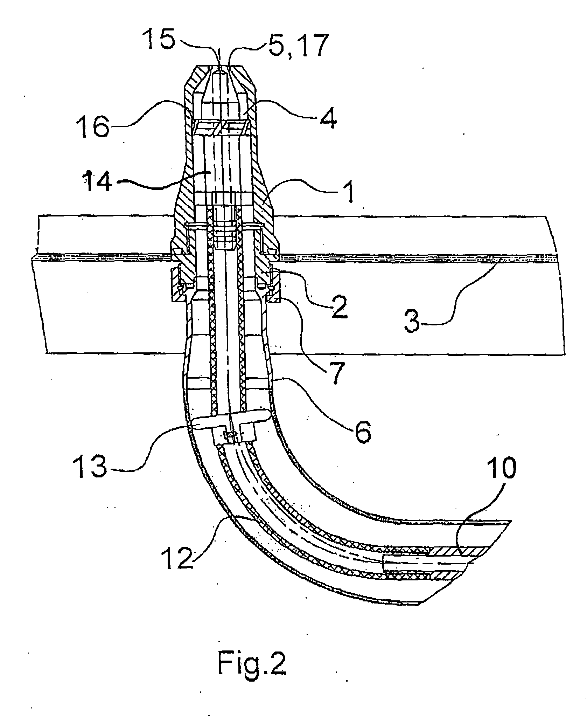

Die Erfindung wird nachstehend an einem Ausführungsbeispiel näher erläutert. Zugehörig zeigt Figur 1 eine Seitenansicht einer erfindungsgemäßen Sprühdüse am Boden einer Wirbelschichteinrichtung. Figur 2 zeigt den vergrößerten Ausschnitt A in Figur 1.

### Ausführungsbeispiel

Im Ausführungsbeispiel ist die erfindungsgemäße Sprühdüse an einer Wirbelschichteinrichtung für die pharmazeutische Industrie dargestellt. Beispielhaft soll ein Tabletten-Vorprodukt mit einer Wirkstoffkomponente beschichtet werden. Die Wirkstoffkomponente ist in einer Suspension gelöst und soll wegen seiner spezifischen Eigenschaften nicht in die Umwelt gelangen. Deshalb läuft der gesamte Prozess innerhalb der Wirbelschichteinrichtung mit Unterdruck, wobei das Abgas einer spezifischen Reinigung unterzogen wird.

Die erfindungsgemäße Sprühdüse besteht aus einem Hüllkörper 1, der mit einem Grundkörper 2 am Boden 3 der Wirbelschichteinrichtung druckdicht verschraubt ist. Im Hüllkörper 1 ist eine axiale zentrische Bohrung 4 vorgesehen, die am oberen Ende eine düsenartige Verjüngung und eine Luftaustrittsöffnung 5 aufweist.

Der Boden 3 der Wirbelschichteinrichtung wird in der Praxis auch als Plenum bezeichnet und umfasst die erforderlichen Durchlässe für die Zuführung des für das Wirbelschichtverfahren erforderlichen Luftstromes.

Am Grundkörper 2 ist ein Luftrohr 6 mittels einer Überwurf-Verschraubung 7 befestigt, welches mit einer in der Zeichnung nicht dargestellten äußeren Quelle für den erforderlichen Luftstrom zum Versprühen eines flüssigen Beschichtungsmittels verbunden ist. Das Luftrohr 6 führt in einem Bogen seitlich aus der Wirbelschichteinrichtung hinaus. Neben der Halterung an der Überwurf-Verschraubung 7 ist das Luftrohr 6 weiterhin in der Wandung 8 der Wirbelschichteinrichtung gelagert. Außerhalb der Wirbelschichteinrichtung endet das Luftrohr 6 an einem Verschluss 9 mit einer Bohrung. Durch die Bohrung ist ein Flüssigkeitsrohr 10 in das Luftrohr 6 eingeführt, durch welches das flüssige Beschichtungsmittel zugeführt wird. Die Zuführung des Luftstromes zum Versprühen der Flüssigkeit in das Luftrohr 6 erfolgt über einen Anschluss 11 vor dem Verschluss 9.

Das Flüssigkeitsrohr 10 ist im Bereich des Verschlusses 9 und im Bereich, in dem das Luftrohr 6 gerade ist, als starres Rohr ausgeführt. Im Bereich einer Biegung des Luftrohres 6 in Richtung der Überwurf-Verschraubung 7 weist das Flüssigkeitsrohr 10 einen flexiblen Rohrabschnitt 12 auf, der innerhalb des Luftrohres 6 mit Stützringen 13 in einer zentrischen Lage gehalten wird. Im Ausführungsbeispiel ist der flexible Rohrabschnitt 12 aus einem druckfesten Kunststoffschlauch gefertigt. Am Ende des flexiblen Rohrabschnittes 12 ist ein Düsenkopf 14 mit einem Flüssigkeitsauslass 15 in der Mittelachse des Hüllkörpers 1 angeordnet.

Der Düsenkopf 14 liegt im Betriebszustand über eine Kraftkomponente, die von außen auf das Flüssigkeitsrohr 10 einwirkt, unter Ausnutzung einer inneren Elastizität des flexiblen Rohrabschnittes 12, an einem Anschlag 16 im Hüllkörper 1 an. Dabei ist der Anschlag 16, der Hüllkörper 1 und der Düsenkopf 14 so ausgelegt, dass zwischen der Luftaustrittsöffnung 5 und dem in der Zeichnung oberen Ende des Düsenkopfes 14 ein ringförmiger Luftaustritt 17 ausgebildet wird.

Nachfolgend soll die Sprühdüse in der Anwendung näher beschrieben werden. Im Betriebszustand befindet sich die Sprühdüse in der Position entsprechend der Zeichnung. Zum Versprühen des flüssigen Beschichtungsmittels wird zuerst über den Anschluss 11, das Luftrohr 6 und die Bohrung 4 im Hüllkörper 1 Druckluft durch den Luftaustritt 17 geleitet. Danach wird über das Flüssigkeitsrohr 10 mit dem flexiblen Rohrabschnitt 12 das Beschichtungsmittel zum Flüssigkeitsauslass 15 im Düsenkopf 14 geleitet. Beim Zusammentreffen des Beschichtungsmittels mit dem Luftstrom oberhalb der Sprühdüse kommt es in bekannter Weise zu Versprühen des Beschichtungsmittels im Luftstrom.

Im Falle einer Verunreinigung des Luftaustritts 17 oder des Flüssigkeitsauslasses 15 durch das in der wirbelschichteinrichtung umwälzende pulvrige oder körnige Trägermaterial muss die Sprühdüse gereinigt werden. Dazu wird die Zuführung des Beschichtungsmittels unterbrochen und eine gegebenenfalls vorhandene Arretierung gelöst. Danach wird das Flüssigkeitsrohr 10 aus der Öffnung des Verschlusses 9 gezogen. Bei leichteren Verstopfungen reicht oft ein mehrmaliges Hin- und Herbewegen des Flüssigkeitsrohres 10 und aller damit verbundenen Teile um die Verstopfung zu beseitigen. Bei stärkeren Verstopfungen muss der Verschluss 9 gelöst werden und das Flüssigkeitsrohr 10 mit dem flexiblen Rohrabschnitt 12, einschließlich der Stützringe 13 und dem Düsenkopf 14, vollständig aus dem Luftrohr 6 herausgezogen und außerhalb der Wirbelschichteinrichtung einer Reinigung unterzogen werden.

Nach der Reinigung wird das Flüssigkeitsrohr 10, mit dem flexiblen Rohrabschnitt 12, einschließlich der Stützringe 13 und dem Düsenkopf 14 in umgekehrter Richtung wieder in das Luftrohr 6 eingeschoben.

### Liste der verwendeten Bezugszeichen

| | | | |
|---|---|---|---|
| 1 | Hüllkörper | 2 | Grundkörper |
| 3 | Boden | 4 | Bohrung |
| 5 | Luftaustrittsöffnung | 6 | Luftrohr |
| 7 | Überwurf-Verschraubung | 8 | Wandung |
| 9 | Verschluss | 10 | Flüssigkeitsrohr |
| 11 | Anschluss | 12 | flexibler Rohrabschnitt |
| 13 | Stützring | 14 | Düsenkopf |
| 15 | Flüssigkeitsauslass | 16 | Anschlag |
| 17 | Luftaustritt | | |

## Patentansprüche

1. Sprühdüse für eine Wirbelschichteinrichtung mit einem zentrischen Flüssigkeitsauslass (15) für ein flüssiges Beschichtungsmittel sowie einem ringförmigen Luftaustritt (17) zur koaxialen Zuführung von Zerstäubungsluft, wobei der ringförmige Luftaustritt (17) von einem Hüllkörper (1) begrenzt ist, der in einer Wandung des Gehäuses der Wirbelschichteinrichtung, insbesondere im Boden (3), gehaltert werden kann, dass der Hüllkörper (1) eine zentrische Bohrung (4) aufweist und über ein Luftrohr (6) mit einer Quelle für die Zerstäubungsluft verbunden ist, dass innerhalb des Hüllkörpers (1) zentrisch ein axial verschiebbarer Düsenkopf (14) gelagert ist, in dem der zentrische Flüssigkeitsauslass (15) ausgebildet ist, **dadurch gekennzeichnet, dass** der Düsenkopf (14) an einem axialen Anschlag (16) innerhalb der zentrischen Bohrung (4) anliegt, dass der Düsenkopf (14) über ein Flüssigkeitsrohr (10) mit einer Quelle für das flüssige Beschichtungsmittel verbunden ist, wobei das Flüssigkeitsrohr (10) im Bereich einer Biegung einen flexiblen Rohrabschnitt (12) aufweist und zentrisch innerhalb des Luftrohres (6) geführt ist und dass das Flüssigkeitsrohr (10) in einem Verschluss (9) im Luftrohr (6) axial verschiebbar gelagert ist.

2. Sprühdüse nach Anspruch 1, **dadurch gekennzeichnet, dass** das eine äußere Einrichtung zur Erzeugung einer axialen Kraftkomponente vorhanden ist, die den Düsenkopf (14) über das Flüssigkeitsrohr (10) an den Anschlag (16) drückt.

3. Sprühdüse nach Anspruch 1 oder 2, **dadurch gekennzeichnet, dass** das Flüssigkeitsrohr (10) und der flexible Rohrabschnitt (12) im Luftrohr (6) mit radialen Stützringen (13) zentrisch und axial verschiebbar gelagert ist.

4. Sprühdüse nach einem der vorangegangenen Ansprüche, **dadurch gekennzeichnet, dass** innerhalb des Düsenkopfes (14) eine axial verschiebbare Reinigungsnadel vorhanden ist, die mit einer Betätigungseinrichtung verbunden ist, welche innerhalb des Flüssigkeitsrohres (10) axial geführt ist.

## Claims

1. Spray nozzle for a fluidized bed device, with a centric liquid outlet (15) for a liquid coating medium and an annular air outlet (17) for the coaxial supply of atomizing air, the annular air outlet (17) being delimited by an enveloping body (1), which can be held in a wall of the housing of the fluidized bed device, in particular in the bottom (3), in that the enveloping body (1) has a centric bore (4) and is connected via an air pipe (6) to a source for the atomizing air, in that an axially displaceable nozzle head (14), in which the central liquid outlet (15) is formed, is mounted centrically within the enveloping body (1), **characterized in that** the nozzle head (14) bears against an axial stop (16) within the centric bore (4), and **in that** the nozzle head (14) is connected via a liquid pipe (10) to a source for the liquid coating medium, the liquid pipe (10) having a flexible pipe section (12) in the region of a bend and being guided centrically within the air pipe (6), and that the liquid pipe (10) is mounted axially displaceably in a lock (9) in the air pipe (6).

2. Spray nozzle according to Claim 1, **characterized in that** an external device for generating an axial force component is present which presses the nozzle head (14) against the stop (16) via the liquid pipe (10).

3. Spray nozzle according to Claim 1 or 2, **characterized in that** the liquid pipe (10) and the flexible pipe section (12) are mounted centrically and axially displaceably in the air pipe (6) by means of radial supporting rings (13).

4. Spray nozzle according to one of the preceding claims, **characterized in that**, within the nozzle head (14), an axially displaceable cleaning needle is present, which is connected to an actuation device which is guided axially within the liquid pipe (10).

## Revendications

1. Buse de pulvérisation pour un dispositif à lit fluidisé, comprenant une sortie de liquide centrale (15) pour un agent de revêtement liquide ainsi qu'une sortie d'air annulaire (17) pour l'acheminement coaxial d'air de pulvérisation, la sortie d'air annulaire (17) étant limitée par un corps d'enveloppe (1) qui peut être maintenu dans une paroi du boîtier du dispositif à lit fluidisé, en particulier dans le fond (3), le corps d'enveloppe (1) présentant un alésage central (4) et étant connecté par un tube à air (6) à une source d'air de pulvérisation, une tête de buse (14) déplaçable axialement étant montée centralement à l'intérieur du corps d'enveloppe (1), et comprenant en son intérieur la sortie de liquide centrale (15), **caractérisée en ce que** la tête de buse (14) s'applique contre une butée axiale (16) à l'intérieur de l'alésage central (4), **en ce que** la tête de buse (14) est connectée par le biais d'un tube de liquide (10) à une source d'agent de revêtement liquide, le tube de liquide (10) présentant dans la région d'un coude une portion de tube flexible (12) et étant guidé centralement à l'intérieur du tube d'air (6), et **en ce que** le tube de liquide (10) est monté de manière déplaçable axialement dans une fermeture (9) dans le tube d'air (6).

2. Buse de pulvérisation selon la revendication 1, **caractérisée en ce qu'**un dispositif extérieur pour produire une composante de force axiale est prévu, lequel presse la tête de buse (14) par le biais du tube de liquide (10) contre la butée (16).

3. Buse de pulvérisation selon la revendication 1 ou 2, **caractérisée en ce que** le tube de liquide (10) et la portion de tube flexible (12) sont montés dans le tube d'air (6) avec des bagues de support radiales (13) de manière déplaçable axialement et centralement.

4. Buse de pulvérisation selon l'une quelconque des revendications précédentes, **caractérisée en ce qu'**à l'intérieur de la tête de buse (14) est prévue une aiguille de nettoyage déplaçable axialement, qui est connectée à un dispositif d'actionnement qui est guidé axialement à l'intérieur du tube de liquide (10).
